# EUROPEAN PATENT APPLICATION

(11) **EP 2 557 852 A1**
(43) Date of publication of application: **13.02.2013**
(21) Application number: 11306029.7
(22) Date of filing: 10.08.2011
(51) Int. Cl.: H04W 36/30, H04W 36/18

(54) **Method, apparatus and computer program for selecting cells and for a mobile transceiver**

(71) Applicant: Alcatel Lucent, 75007 Paris (FR)
(72) Inventor: Wong, Shin Horng, Chippenham, Wiltshire SN140SP (GB); Dhingra, Vikas, 560037 Bangalore, Karnataka (IN)
(74) Representative: 2SPL Patentanwälte

(57) **Abstract**

Method, apparatus and computer program for selecting cells and for a mobile transceiver 200 for packet switched data transmission from a first cell 300a as primary serving cell and a second cell 301a as a secondary serving cell to the mobile transceiver 200. The secondary serving cell being determined based on information on a reception quality of a radio signal from the second cell 301a at the mobile transceiver 200 indicating that the reception quality of the signal from the second cell 301a allows for packet switched data transmission from the second cell 301a to the mobile transceiver 200, and indicating that the reception quality of the signal from the second cell 301a relative to the signal of the primary serving cell has been better than a relative cell-addition-threshold for a given cell-addition-time or indicating that the reception quality of the signal from the second cell 301a has been above an absolute cell-addition-threshold for the given cell-addition-time.

## Description

Embodiments of the present invention relate to mobile communications, more particularly to mobile communication networks using packet switched data transmission.

### Background

Demands for higher data rates for mobile services are steadily increasing. At the same time, modem mobile communication systems as 3rd Generation systems (3G) and 4th Generation systems (4G) provide enhanced technologies, which enable higher spectral efficiencies and allow for higher data rates and cell capacities.

In Wideband-Code Division Multiple Access (WCDMA), a User Equipment (UE) can be in different states, where CELL_DCH determines the state in which the UE has an active data connection to the network. In CELL_DCH the UE has an active set consisting of cells that the UE can simultaneously communicate with, while utilizing dedicated connections. In other words, the UE is assigned permanent radio resources, as e.g. time, frequency and/or code resources, to transmit and receive data to each of the cells in the active set. That is, the UE can perform Soft HandOver (SHO) with these cells. SHO allows these cells to control the UE uplink transmission thereby controlling their uplink interference. SHO can increase the performance of uplink and downlink transmissions since it can benefit from diversity gains, as e.g. selective and soft combining.

An active set usually contains at least a serving cell, which is the main cell the UE is attached to. The other members in the active set are called the non-serving cells. The serving cell usually has the best Radio Frequency (RF) conditions at the UE and is selected by the network based on UE measurements, e.g. Event 1d as part of the 3^{rd} Generation Partnership Project (3GPP) specifications in 3GPP Technical Specification (TS) 25.331 V10.4.0 (2011-06).

For packet switched data transmission in the downlink, i.e. when radio resources are not permanently assigned to a UE, such SHO is not defined. For packet switched transmission radio resources are assigned to a UE only for transmission of a data block or packet, while for subsequent data blocks or packets other resources can be assigned. The resource assignment can depend on the respective channel condition of a UE and is also referred to as scheduling process. Since radio resources of such a channel can be shared between users, these channels are also known as shared channels, an example of which is the High-Speed-Downlink Shared CHannel (HS-DSCH) as part of the 3^{rd} Generation Partnership Project (3GPP) specifications since Release 5.

### Summary

Embodiments are based on the finding that for MultiPoint transmission for High-Speed Downlink Packet Access (MP-HSDPA) multiple cells can be managed in a set of cells for packet switched transmission. The UE can be enabled to receive multiple packet switched transmissions, e.g. HSDPA, from two (or possible more) cells that can belong to different base station transceivers, e.g. Node Bs (NB) in terms of 3GPP. It is a further finding that these two or more HSDPA transmissions can be carried by the same or different frequencies and they can be of different HS-DSCH streams. In the following, the main serving cell of the UE in a multipoint packet switched transmission, e.g. an MP-HSDPA operation, is called the Primary Serving (PS) cell and any other cell from which the UE receives its second packet switched transmission, e.g. HSDPA signal, is the Secondary Serving (SS) cell.

Embodiments are further based on the finding that a mechanism can be defined to select the SS cell in multipoint packet switched transmission, e.g. for MP-HSDPA. It is a further finding that periodic measurement reports provided by the UE can be used to determine the SS cell, however, this is subject to the frequency of this report. Therefore it is an even further finding that a specific measurement and respective report are advantageous for multipoint packet switched transmission. It is a further finding that a periodic measurement report for a PS cell change may not capture the moment in which a change of SS cell is useful.

Embodiments are based on the finding that an event based solution can capture the moment when a mobile transceiver needs to change a secondary serving cell.

Embodiments provide an apparatus for selecting cells of a cellular mobile communication network to communicate with a mobile transceiver using scheduled packet data. In the following, said apparatus will also be referred to as a selection apparatus, in some embodiments the apparatus may be implemented in a radio network controller or a base station transceiver. Moreover, the terms (cellular) mobile communication network and mobile communication system will be used synonymously. The cellular mobile communication system may, for example, correspond to one of the 3GPP-standardized mobile communication networks, as e.g. Long Term Evolution (LTE), an LTE-Advanced (LTE-A), a Universal Mobile Telecommunication System (UMTS) or a UMTS Terrestrial Radio Access network (UTRAN), an Evolved-UTRAN (E-UTRAN), a Global System for Mobile Communication (GSM) or Enhanced Data Rates for GSM Evolution (EDGE) network, a GSM/EDGE Radio Access Network (GERAN), generally an Orthogonal Frequency Division Multiple Access (OFDMA) network, etc., or mobile communication networks with different standards, e.g. Worldwide Interoperability for Microwave Access (WIMAX).

The mobile communication network communicates with a mobile transceiver using scheduled packet data, in other words, the transmission is not permanently utilizing radio resources. The radio resources are utilized and assigned to the mobile transceiver (UE) on a short time basis and per data block or data packet to which it may also be referred to as transport block. The scheduled packet data transmission is a bursty transmission, i.e. it is intermittently or interrupted by periods of suspended transmission during which the radio resources can be assigned to other UEs. In some embodiments such transmission is established using an HS-DSCH in a UTRAN.

In embodiments the mobile communication network comprises a plurality of base station transceivers and a base station transceiver may operate one or more cells. The term cell refers to a coverage area of radio services provided by a base station transceiver. A base station transceiver may operate multiple cells, in some embodiments a cell may correspond to a sector. For example, sectors can be achieved using sector antennas, which provide a characteristic for covering an angular section around the base station transceiver. In some embodiments, a base station transceiver may, for example, operate three or six cells covering sectors of 120° (in case of three cells), 60° (in case of six cells) respectively. A mobile transceiver can be registered with a cell, i.e. it can be associated to a cell such that data can be exchanged between the network and the UE in the coverage area of the associated cell. A cell is thus operated by a base station transceiver and can be seen as a coverage area, which can be identified through reference or broadcast channels with a respective identification, as for example the Common PIlot CHannel (CPICH) in UMTS. The selection apparatus comprises means for determining information on a reception quality of a radio signal of a cell at the mobile transceiver. In some embodiments the means for determining the information can be adapted to receive the information on the reception quality from the mobile transceiver in terms of a measurement report. In other words, the UE may be configured to carry out certain measurements on the radio signals of the cells and it may report the corresponding results to the selection apparatus. Such reporting can be based on event triggering at the UE, i.e. the UE takes measurements and if the corresponding results fulfill a configured requirement a reporting event is triggered, which includes reporting of a corresponding indication to the network. The means for determining can be adapted to determine said information on the reception quality by receiving and interpreting the indication on the event.

Furthermore, embodiments of the selection apparatus comprise means for establishing a set of cells for packet switched transmission to the mobile transceiver. The set of cells comprising a first cell as a primary serving cell, the primary serving cell being determined based on the information on the reception quality of a radio signal from the first cell at the mobile transceiver indicating that the reception quality of the signal from the first cell allows for packet switched data transmission from the first cell to the mobile transceiver. In other words, set of cells is maintained for providing the mobile transceiver with downlink packet switched data from each of the cells in the set. The set of cells may correspond to a selection of cells, which can, for example, be identified by their respective identification. In some embodiments such cell identification can be unique. The set of cells comprises a primary serving cell, which may, for example, have established an HS-DSCH, which can be used to transmit data to the mobile transceiver in a packet switched manner. In embodiments the cell with the best RF condition may be selected as primary serving cell.

Moreover, the means for establishing the set of cells for packet switched transmission to the mobile transceiver is further adapted to add a second cell as a secondary serving cell to the set of cells. In other words, in addition to the primary serving cell there is a secondary serving cell, which is different from the primary serving cell and which also transmits packet switched data to the mobile transceiver. Embodiments may therewith establish two or more parallel data streams using two or more different cells. The secondary serving cell is determined based on information on a reception quality of a radio signal from the second cell at the mobile transceiver indicating that the reception quality of the signal from the second cell allows for packet switched data transmission from the second cell to the mobile transceiver. In other words, one basic criterion for a cell to be added as a secondary serving cell to the set of cells for packet switched data transmission is that the signal quality of said cell at the mobile transceiver is good enough to support packet switched data transmission in the first place.

Furthermore, in embodiments for the second cell to be added to the set of cells, the information on the reception quality of the radio signal from the second cell at the mobile transceiver may indicate that the reception quality of the signal from the second cell relative to the signal of the primary serving cell has been better than a relative cell-addition-threshold for a given cell-addition-time. In other words, the reception quality of the radio signal of the second cell may be evaluated relative to the reception quality of the radio signal received at the mobile transceiver from the primary serving cell. In embodiments such a relative evaluation can be carried out in terms of one of or a combination of a Signal-to-Noise Ratio (SNR), a Signal-to-Interference Ratio (SIR), a Signal-to-Interference-and-Noise Ratio (SINR), a pathloss, a received signal strength, etc. In some embodiments the reception quality of the radio signal of the second cell may be compared to the reception quality of the radio signal of the first cell, for example, the respective pathlosses may be compared. If the reception quality of the second cell has not been worse than a certain offset from the reception quality of the primary cell (relative cell-addition threshold) for a certain cell-addition time, the second cell is added to the set of cells for packet switched transmission as secondary serving cell. In order to prevent pingpong effects, all measurement or event criteria may have to be fulfilled for a certain time, here the cell-addition time. As radio signals reference or pilot signals may be evaluated or measured, e.g. CPICHs in UMTS.

Here and in the following a number of time periods will be defined as cell-addition time, cell-removal time, cell-replacement time, cell-exchange-time, etc. In addition to these time periods, respective hysteresis values can be applied, i.e. these can be added on the respective thresholds. In other words, in embodiments hysteresis values may be added to the thresholds, such that the respective events are only triggered if the threshold plus the hysteresis value are passed over or fallen below, to avoid pingpong effects or useless changes in the set of cells for packet switched transmission.

Embodiments may additionally or alternatively evaluate an absolute addition criterion. In embodiments for the second cell to be added to the set of cells, the information on the reception quality of the radio signal from the second cell at the mobile transceiver may indicate that the reception quality of the signal from the second cell has been above an absolute cell-addition-threshold for the given cell-addition-time. The quality of the radio signal of the second cell may again be evaluated as described above but compared to an absolute threshold (absolute cell-addition threshold) as e.g. a lower pathloss limit, a lower SNR, SIR or SINR threshold etc. The mobile transceiver may report a cell-addition event as information on the reception quality.

In other words, embodiments may use an absolute or a relative criterion to add a cell as a secondary serving cell. In embodiments multiple cells can be added to the set of cell for packet switched transmission as secondary serving cells. A cell, which has been added to the set as secondary serving cell may as well be removed under certain circumstances. In embodiments, the means for establishing the set of cells can be adapted to replace the second cell with a third cell as secondary serving cell, when the information on the reception quality of a radio signal from the third cell at the mobile transceiver indicates that the reception quality of the radio signal from the third cell has been higher or better than the reception quality of the radio signal from the second cell for a cell-replacement-time. In other words, the reception quality of the radio signals of multiple cells may be evaluated at the mobile transceiver. The means for determining may determine information on a reception quality for each of the multiple cells, albeit that the mobile transceiver reports on measurements only if a preconfigured event occurs. Such an event may be that a third cell, which is not a secondary serving cell, has been stronger than the second cell for a certain time (cell-replacement-time), which already is a secondary serving cell and part of the set. In embodiments, the mobile transceiver apparatus may report a cell-replacement event as information on the reception quality. Then the second cell may thus be replaced by the third cell in set of cells for packet switched transmission as secondary serving cell. Furthermore, in embodiments the means for establishing the set of cells can be adapted to remove the second cell from the set of cells for packet switched transmission, when the information on the reception quality of a radio signal from the second cell at the mobile transceiver indicates that the reception quality of the radio signal from the second cell relative to the signal of the primary serving cell has been below a relative cell-removal-threshold for a cell-removal-time. The means for establishing can be adapted to remove the second cell from the set of cells for packet switched transmission, when the information on the reception quality of a radio signal from the second cell at the mobile transceiver indicates that the reception quality of the signal from the second cell has been below an absolute cell-removal-threshold for a cell-removal-time. In line with what is described above with respect to cell addition, the same applies to the removal of a cell from the set of cells for packet switched transmission. The mobile transceiver may thus report a cell-removal event as information on the reception quality.

The means for establishing the set of cells can be adapted to replace the primary serving cell with the second cell and to replace the secondary serving cell with the first cell, when the information on the reception quality of the radio signal from the second cell at the mobile transceiver indicates that the reception quality of the signal from the second cell has been higher than the reception quality of the radio signal of the first cell for a cell-exchange-time. In other words, primary and secondary serving cells can be exchanged in an embodiment, when the secondary serving cell becomes better than the primary serving cell. The mobile transceiver may thus report a cell-exchange event as information on the reception quality.

As it has already been mentioned above, in embodiments there may be multiple secondary serving cells. Hence, the means for establishing the set of cells can be adapted to select two or more cells as a set of secondary serving cells. The set of secondary serving cells can be determined based on the information on the reception quality of radio signals from the two or more cells at the mobile transceiver indicating that the reception qualities of the signals from the two or more cells allow for packet switched data transmission from the two or more cells to the mobile transceiver. In line with the above description for the single second cell, the set of secondary serving cells can be determined based on the information on the reception quality of radio signals from the two or more cells at the mobile transceiver indicating that the reception qualities of the signals from the two or more cells relative to the signal of the primary serving cell have been better than the relative cell-addition-threshold for a given cell-addition-time, or indicating that the reception qualities of the signals from the two or more cells have been above the absolute cell-addition-threshold for the given cell-addition-time.

In further embodiments, the means for determining can be further adapted to determine information on a capacity of the second cell from a base station transceiver of the second cell. In other words, in embodiments a verification may be carried out that the second cell, which, considering its signal quality, is a candidate for addition as secondary serving cell, has the capacity to serve the mobile transceiver or whether it is overloaded. Thus, the information on the capacity can comprise an indication on whether the second cell has capacity for transmitting packet switched data to the mobile transceiver. The means for establishing can consequently be adapted to select the second cell for the set of cells when the indication indicates that the second cell has the capacity for transmitting packet switched data to the mobile transceiver.

Moreover, as the mobile transceiver may also have circuit switched or uplink packet switched connections to the network, in some embodiments the selection apparatus can further comprise means for controlling one or more active sets of cells, which comprises cells which communicate circuit switched data to the mobile transceiver and/or receive uplink packet switched data from the mobile transceiver. In terms of 3GPP, the uplink active set for packet switched transmission is also referred to as Enhanced-Dedicated CHannel (E-DCH) active set, which determines a set of cells for High-Speed Uplink Packet Access (HSUPA). The means for establishing the set of cells for packet switched transmission can be adapted to select only cells from the active sets (DCH and/or E-DCH) for the set of cells for packet switched transmission. In other words, only cells which already have a connection switched link to the mobile transceiver and/or cells which already have a packet switched uplink connection may be considered as primary and/or secondary serving cell. Such a restriction may in embodiments limit the number of cells the mobile transceiver would have to monitor.

The means for controlling may control two or more different or equal active sets of cells on different frequency carriers. In other words, the cellular mobile communication network may operate cells on one or more frequency layers. Each frequency layer may have its own radio conditions, i.e. owing to different propagation conditions, network layouts and structures, etc. Therefore, the active sets may be different in the different frequency layers, in other scenarios they may as well be identical. The active sets of cells comprise the cells which communicate circuit switched data to the mobile transceiver (DCH) and/or which receive uplink packet switched data (E-DCH) from the mobile transceiver. The means for establishing the set of cells for packet switched transmission can be adapted to establish one or more equal or different sets of cells and to select only cells from the one or more active sets for the one or more sets of cells for packet switched transmission. In other words, only cells for which a connection switched communication has already been established (DCH) and/or which receive uplink packet switched data (E-DCH) may be considered for the set of cells for packet switched communication on each frequency layer. Again, in embodiments this may limit the cells to monitor for the mobile transceiver on each frequency layer. In some embodiments, the primary serving cell and a secondary serving cell may operate on different frequency layers. In some embodiments the means for establishing the set of cells for packet switched transmission can be adapted to select the primary serving cell and the secondary serving cell on the same frequency carrier.

In embodiments, the selection apparatus can be implemented in a Radio Network Controller (RNC) or a base station transceiver. The RNC may control multiple base station transceivers or NodeBs and form an interface to the core network and/or other networks. Embodiments can therewith provide an RNC or a base station transceiver comprising the selection apparatus.

While the above description was mainly concerned with the network side, embodiments may also provide an according apparatus for a mobile transceiver, i.e. embodiments may provide said apparatus to be operated by or included in a mobile transceiver. In the following, said apparatus will also be referred to as mobile transceiver apparatus. The mobile transceiver communicates with the cellular mobile communication network using scheduled packet switched data transmission. The mobile transceiver apparatus comprises means for receiving one or more measurement configurations, the measurement configurations comprising information on measurements on a reception quality of radio signals of a plurality of cells at the mobile transceiver. In other words, the measurement configuration may be received from a network entity, e.g. a radio network controller or a base station transceiver, a cell, a NodeB etc. The measurement configuration can correspond to the above described measurements.

The mobile transceiver apparatus comprises means for measuring a reception quality of the radio signals one or more cells of the plurality of cells at the mobile transceiver based on the measurement configurations. Moreover, the mobile transceiver apparatus comprises means for reporting information on a measurement result on a first cell to the mobile communication network to establish packet switched transmission from the first cell as a primary serving cell to the mobile transceiver. The primary serving cell is determined based on the information on the reception quality of a radio signal from the first cell at the mobile transceiver, which indicates that the reception quality of the signal from the first cell allows for packet switched data transmission from the first cell to the mobile transceiver. In embodiments the cell with the best RF conditions at the mobile transceiver may be selected as primary serving cell.

The means for reporting is further adapted to report information on a measurement result on a second cell to the mobile communication network to establish packet switched transmission from the second cell as a secondary serving cell to the mobile transceiver. In embodiments the secondary serving cell can be determined based on the information on the reception quality of the radio signal from the second cell at the mobile transceiver indicating that the reception quality of the signal from the second cell allows for packet switched data transmission from the second cell to the mobile transceiver. Furthermore, the secondary serving cell can be determined based on the information on the reception quality of the radio signal from the second cell at the mobile transceiver indicating that the reception quality of the signal from the second cell relative to the signal of the primary serving cell has been better than a relative cell-addition-threshold for a given cell-addition-time or indicating that the reception quality of the signal from the second cell has been above an absolute cell-addition-threshold for the given cell-addition-time. According to the above description the mobile transceiver apparatus may report a cell-addition event as information on the reception quality.

In embodiments the means for reporting can be adapted to report information on a third cell as secondary serving cell based on a measurement configuration, when the information on the reception quality of a radio signal from the third cell at the mobile transceiver indicates that the reception quality of the radio signal from the third cell has been higher or better than the reception quality of the radio signal from the second cell for a cell-replacement-time. In line with what was described about, the mobile transceiver apparatus may report a cell-replacement event as information on the reception quality.

Hence, the means for reporting can be adapted to report information on the second cell based on a measurement configuration, when the reception quality of a radio signal from the second cell at the mobile transceiver indicates that the reception quality of the signal from the second cell relative to the signal of the primary serving cell has been below a relative cell-removal-threshold for a cell-removal-time or when the information on the reception quality of a radio signal from the second cell at the mobile transceiver indicates that the reception quality of the signal from the second cell has been below an absolute cell-removal-threshold for a cell-removal-time. The mobile transceiver apparatus may thus report a cell-removal event as information on the reception quality.

The means for reporting can be adapted to report information on the primary serving cell and the secondary serving cell based on a measurement configuration, when the reception quality of the radio signal from the second cell at the mobile transceiver indicates that the reception quality of the signal from the second cell has been better than the reception quality of the radio signal of the first cell for a cell-exchange-time. The mobile transceiver apparatus may thus report a cell-exchange event as information on the reception quality.

Moreover, the means for reporting can be adapted to report measurements on two or more cells based on measurement configurations. The two or more cells may transmit on one or more frequencies. In line with the above description, the mobile transceiver apparatus can further comprise means for maintaining one or more active sets of cells, which communicate circuit switched data to the mobile transceiver (DCH) and/or which receive uplink packet switched data (E-DCH). The means for reporting information on the cells for packet switched transmission can be adapted to report only on cells from the active sets for the set of cells for packet switched transmission. The means for maintaining may control two or more different or equal active sets of cells on different frequency carriers. The active sets of cells may comprise cells which communicate circuit switched data to the mobile transceiver (DCH) and/or which receive uplink packet switched data (E-DCH) from the mobile transceiver. The means for reporting on the set of cells for packet switched transmission can be adapted to report on one or more equal or different sets of cells and to select only cells from the one or more active sets for the one or more sets of cells for packet switched transmission.

Embodiments further provide a mobile transceiver comprising the mobile transceiver apparatus and/or a system comprising the above RNC or base station controller and the mobile station transceiver.

Embodiments also provide a method for selecting cells of a cellular mobile communication network to communicate with a mobile transceiver using scheduled packet data. The mobile communication network comprises a plurality of base station transceivers, a base station transceiver operates one or more cells. The method comprises a step of determining information on a reception quality of a radio signal of a cell at the mobile transceiver. The method comprises a further step of establishing a set of cells for packet switched transmission to the mobile transceiver. The set of cells comprises a first cell as a primary serving cell, the primary serving cell being determined based on the information on the reception quality of a radio signal from the first cell at the mobile transceiver indicating that the reception quality of the signal from the first cell allows for packet switched data transmission from the first cell to the mobile transceiver. The method comprises a further step of adding a second cell as a secondary serving cell to the set of cells for communicating packet switched data from the second cell (301a) to the mobile transceiver (200). The secondary serving cell is determined based on information on a reception quality of a radio signal from the second cell at the mobile transceiver indicating that the reception quality of the signal from the second cell allows for packet switched data transmission from the second cell to the mobile transceiver, and indicating that the reception quality of the signal from the second cell relative to the signal of the primary serving cell has been better than a relative cell-addition-threshold for a given cell-addition-time or indicating that the reception quality of the signal from the second cell has been above an absolute cell-addition-threshold for the given cell-addition-time.

Embodiments may also provide a method for a mobile transceiver of a cellular mobile communication network. The mobile transceiver communicates with the cellular mobile communication network using scheduled packet switched data transmission, the mobile communication network comprises a plurality of base station transceivers. A base station transceiver operates one or more cells. The method comprises a step of receiving one or more measurement configurations, the measurement configurations comprises information on measurements on a reception quality of radio signals of a plurality of cells at the mobile transceiver. The method further comprises measuring a reception quality of the radio signals of one or more cells of the plurality of cells at the mobile transceiver based on the measurement configurations. The method further comprises a step of reporting information on a measurement result on a first cell to the mobile communication network to establish packet switched transmission from the first cell as a primary serving cell to the mobile transceiver. The primary serving cell is determined based on the information on the reception quality of a radio signal from the first cell at the mobile transceiver indicating that the reception quality of the signal from the first cell allows for packet switched data transmission from the first cell to the mobile transceiver. The method further comprises a step of reporting information on a measurement result on a second cell to the mobile communication network to establish packet switched transmission from the second cell as a secondary serving cell to the mobile transceiver. The secondary serving cell is determined based on the information on the reception quality of a radio signal from the second cell at the mobile transceiver indicating that the reception quality of the signal from the second cell allows for packet switched data transmission from the second cell to the mobile transceiver, and indicating that the reception quality of the signal from the second cell relative to the signal of the primary serving cell has been better than a relative cell-addition-threshold for a given cell-addition-time or indicating that the reception quality of the signal from the second cell has been above an absolute cell-addition-threshold for the given cell-addition-time.

Embodiments further provide a computer program having a program code for performing one of the above methods.

### Brief description of the Figures

Some other features or aspects will be described using the following non-limiting embodiments of apparatuses and/or methods and/or computer programs by way of example only, and with reference to the accompanying figures, in which
Figure 1 illustrates a cellular communication network;
Figure 2 shows an embodiment of a selection apparatus;
Figure 3 shows an embodiment of a mobile transceiver apparatus;
Figure 4 illustrates another network scenario with three base station transceivers;
Figure 5 illustrates a viewgraph of reception qualities;
Figure 6 illustrates another network scenario with three base station transceivers transmitting on two frequency layers;
Figure 7 shows a block diagram of an embodiment of a method for selecting cells; and
Figure 8 shows a block diagram of an embodiment of a method for a mobile transceiver.

### Description of some Embodiments

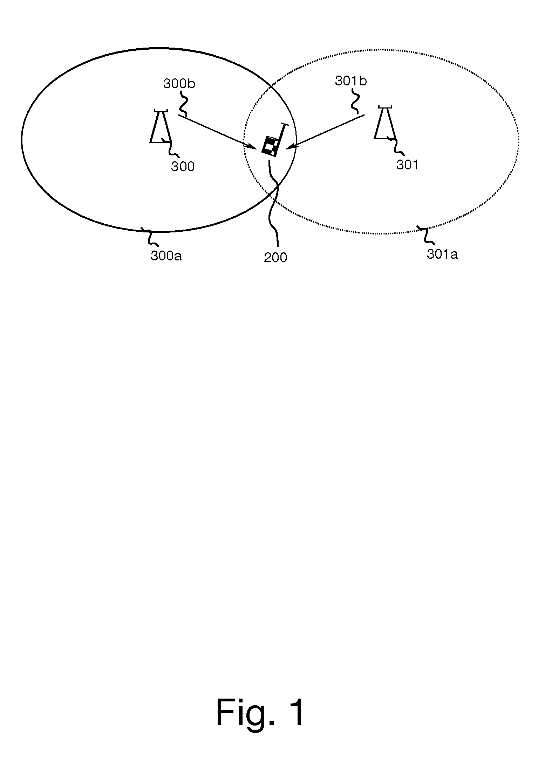

Figure 1 illustrates a cellular communication network with a first base station transceiver 300 operating a first cell for which the coverage area is referenced by 300a. Moreover, the network comprises a second base station transceiver 301 operating a second cell for which the coverage area is referenced by 301a. Furthermore, Figure 1 shows a mobile transceiver 200, which is located in a section of the network, where the coverage areas 300a and 301a of the first cell and second cell overlap.

In this embodiment multipoint transmission for HSDPA (MP-HSDPA) is assumed. The UE 200 is able to receive HSDPA transmission from the two (or possible more) cells 300a and 301a that can belong to different NodeBs 300, 301 (NB) as shown in Figure 1. These two HSDPA transmissions are indicated by the two arrows 300b and 301b. In this embodiment it is further assumed that the transmissions are carried by the same frequency and that they can be of different HS-DSCH streams. As already stated above, in the dual cell case, the main serving cell of the UE 200 in a MP-HSDPA operation is called the Primary Serving (PS) Cell and the other cell in which the UE 200 receives its second HSDPA signal, is the Secondary Serving (SS) Cell. In Figure 1 the first cell 300a is assumed to be the PS cell and the second cell 301a is assumed to be the SS cell for the UE 200. The primary cell is assumed to be the cell with the best RF condition at the mobile transceiver.

In order to select the primary and secondary serving cells an embodiment of a selection apparatus is comprised in a network component, e.g. in an RNC connected to the base station transceivers 300 and 301 or it can be implemented in one of the base station transceivers 300, 301 themselves, being connected among each other.

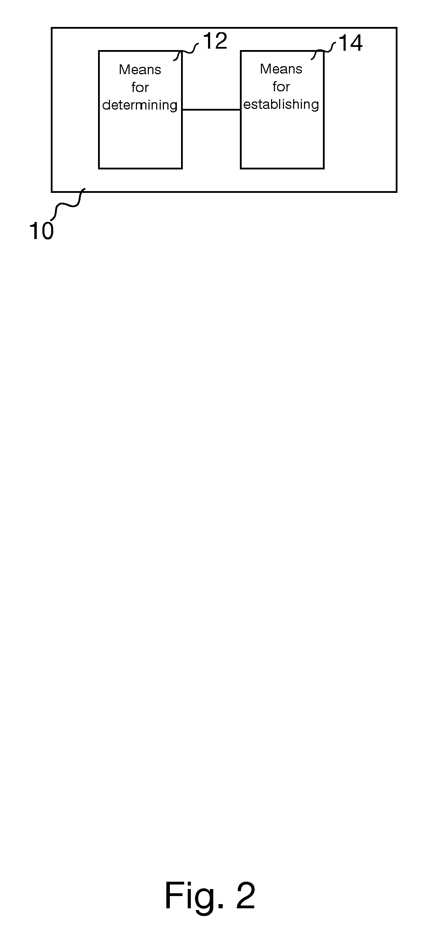

Figure 2 shows an embodiment of an apparatus 10 for selecting cells of the cellular mobile communication network shown in Figure 1, to communicate with a mobile transceiver 200 using scheduled packet data. The mobile communication network comprises a plurality of base station transceivers 300, 301, which operate one or more cells 300a, 301a. The apparatus 10 comprises means for determining 12 information on a reception quality of a radio signal of a cell 300a, 301a at the mobile transceiver 200. The apparatus 10 further comprises means for establishing 14 a set of cells for packet switched transmission to the mobile transceiver 200. The set of cells comprises a first cell 300a as a primary serving cell. The primary serving cell is determined based on the information on the reception quality of the radio signal from the first cell 300a at the mobile transceiver 200 indicating that the reception quality of the signal from the first cell 300a allows for packet switched data transmission from the first cell 300a to the mobile transceiver 200.

The means for establishing 14 the set of cells for packet switched transmission to the mobile transceiver 200 is further adapted to add a second cell 301a as a secondary serving cell to the set of cells for communicating packet switched data from the second cell (301a) to the mobile transceiver (200). The secondary serving cell is determined based on information on a reception quality of the radio signal from the second cell 301a at the mobile transceiver 200 indicating that the reception quality of the signal from the second cell 301a allows for packet switched data transmission from the second cell 301a to the mobile transceiver 200. The secondary serving cell is determined further based on information on a reception quality of the radio signal from the second cell 301a indicating that the reception quality of the signal from the second cell 301a relative to the signal of the primary serving cell has been better than a relative cell-addition-threshold for a given cell-addition-time or indicating that the reception quality of the signal from the second cell 301a has been above an absolute cell-addition-threshold for the given cell-addition-time.

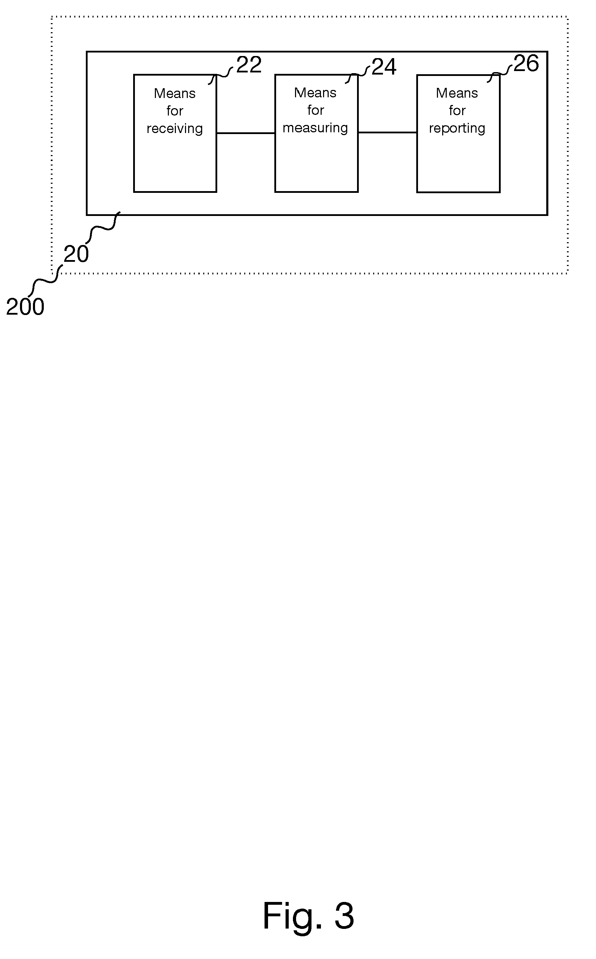

Figure 3 shows a corresponding embodiment of an apparatus 20 for a mobile transceiver 200, which communicates with the cellular mobile communication network, as shown in Figure 1, using scheduled packet switched data transmission. The mobile communication network comprises the base station transceivers 300, 301 operating the cells 300a and 301a. In Figure 3 the optional mobile transceiver 200 is shown as a dotted line. The mobile transceiver apparatus 20 comprises means for receiving 22 one or more measurement configurations. The measurement configurations comprise information on measurements on a reception quality of radio signals of a plurality of cells 300a, 301a at the mobile transceiver 200. The apparatus 20 further comprises means for measuring 24 a reception quality of the radio signals of one or more cells 300a 301a of the plurality of cells at the mobile transceiver 200 based on the measurement configurations.

Moreover, the mobile transceiver apparatus 20 comprises means for reporting 26 information on a measurement result on a first cell 300a to the mobile communication network to establish packet switched transmission from the first cell 300a as a primary serving cell to the mobile transceiver 200. The primary serving cell being determined based on the information on the reception quality of a radio signal from the first cell 300a at the mobile transceiver 200 indicating that the reception quality of the signal from the first cell 300a allows for packet switched data transmission from the first cell 300a to the mobile transceiver 200. The means for reporting 26 is further adapted to report information on a measurement result on the second cell 301a to the mobile communication network to establish packet switched transmission from the second cell 301a as a secondary serving cell to the mobile transceiver 200. The secondary serving cell is determined based on the information on the reception quality of the radio signal from the second cell 301a at the mobile transceiver 200 indicating that the reception quality of the signal from the second cell 301a allows for packet switched data transmission from the second cell 301a to the mobile transceiver 200, and indicating that the reception quality of the signal from the second cell 301a relative to the signal of the primary serving cell has been better than a relative cell-addition-threshold for a given cell-addition-time or indicating that the reception quality of the signal from the second cell 301a has been above an absolute cell-addition-threshold for the given cell-addition-time.

In other words, the first SS cell 301a can be selected based on an event called Event 1a-m as information on the reception quality of the radio signal of the second cell 301a and as information on the measurement result. The measurement is configured such that the event is triggered if the difference between the primary serving cell and a non-serving cell signal qualities fall within a threshold (relative cell-addition threshold) for a predetermined amount of time, i.e. the cell-addition time.

In the embodiment the apparatus 10 further comprises means for controlling one or more active sets of cells. The one or more active sets of cells comprises cells 300a, 301a, which communicate circuit switched data to the mobile transceiver 200 (DCH) and/or which receive uplink packet switched data (E-DCH) from the mobile transceiver (200). The means for establishing 14 the set of cells for packet switched transmission is adapted to select only cells from the one or more active sets for the set of cells for packet switched transmission.

Correspondingly, the mobile transceiver apparatus 20 further comprises means for maintaining one or more active sets of cells, the one or more active sets of cells comprising cells 300a, 301a which communicate circuit switched data to the mobile transceiver 200 (DCH) and/or which receive uplink packet switched data (E-DCH) from the mobile transceiver (200). The means for reporting 26 information on the cells for packet switched transmission is adapted to report only on cells 300a, 301a from the one or more active sets for the set of cells for packet switched transmission.

Unlike Event 1a in 3GPP TS 25.311, for Event 1a-m, the apparatus 20 or the UE 200 only compares cells that are already in the one or more active sets (DCH and/or E-DCH). The Event 1a-m has a more stringent threshold than that of Event 1a and it (Event 1a-m) would form a sub-active set as the set of cells for packet switched transmission.

The means for determining is further adapted to determine information on a capacity of the second cell 301a from a base station transceiver 301 of the second cell 301a. The information on the capacity comprises an indication on whether the second cell 301a has capacity for transmitting packet switched data to the mobile transceiver 200. The means for establishing 14 is further adapted to select the second cell 301a for the set of cells when the indication indicates that the second cell 301a has the capacity for transmitting packet switched data to the mobile transceiver 200.

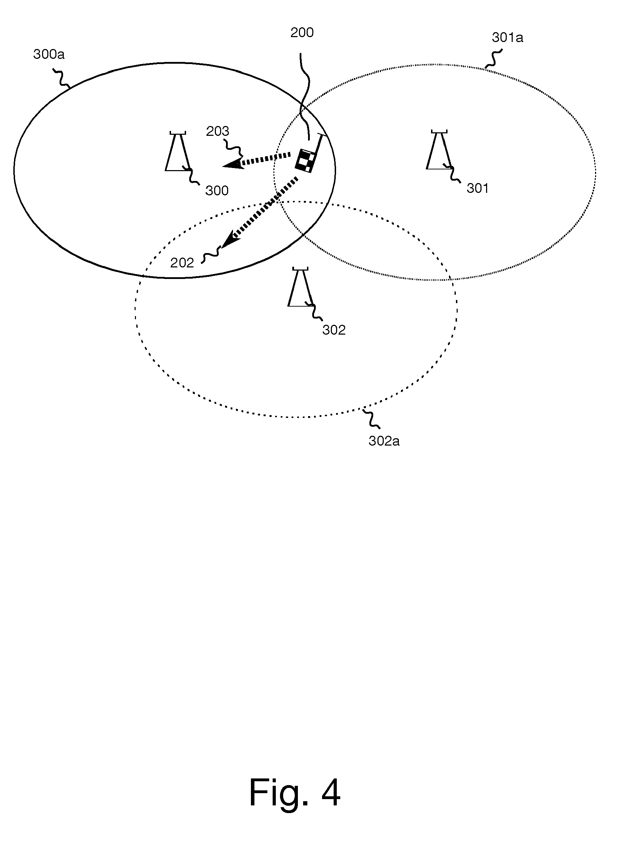

Figure 4 illustrates another network scenario with three base station transceivers 300, 301 and 302 operating three cells 300a, 301a and 302a. In Figure 4 the mobile transceiver 200 is shown in the overlapping region of cells 300a and 301a and the arrow 202 indicates that the mobile station moves towards the overlapping region between cells 300a and 302a.

In the embodiment of the selection apparatus 10 the means for establishing 14 the set of cells is adapted to replace the second cell 301a with a third cell 302a as secondary serving cell, when the information on the reception quality of a radio signal from the third cell 302a at the mobile transceiver 200 indicates that the reception quality of the radio signal from the third cell 302a has been higher than the reception quality of the radio signal from the second cell 301a for a cell-replacement-time.

In line, in the embodiment of the mobile transceiver apparatus 20 the means for reporting 26 is adapted to report information on a third cell 302a as secondary serving cell based on a measurement configuration, when the information on the reception quality of a radio signal from the third cell 302a at the mobile transceiver 200 indicates that the reception quality of the radio signal from the third cell 302a has been higher than the reception quality of the radio signal from the second cell 301a for a cell-replacement-time.

In other words and referring to Figure 4, when the mobile transceiver 200 has entered the overlapping region between cells 300a and 302a, the secondary serving cell will eventually be replaced. The second cell 301a first establishing the secondary serving cell will eventually be replaced by the third cell 302a establishing the secondary serving cell thereafter. In the following this event will also be referred to as the M1-event.

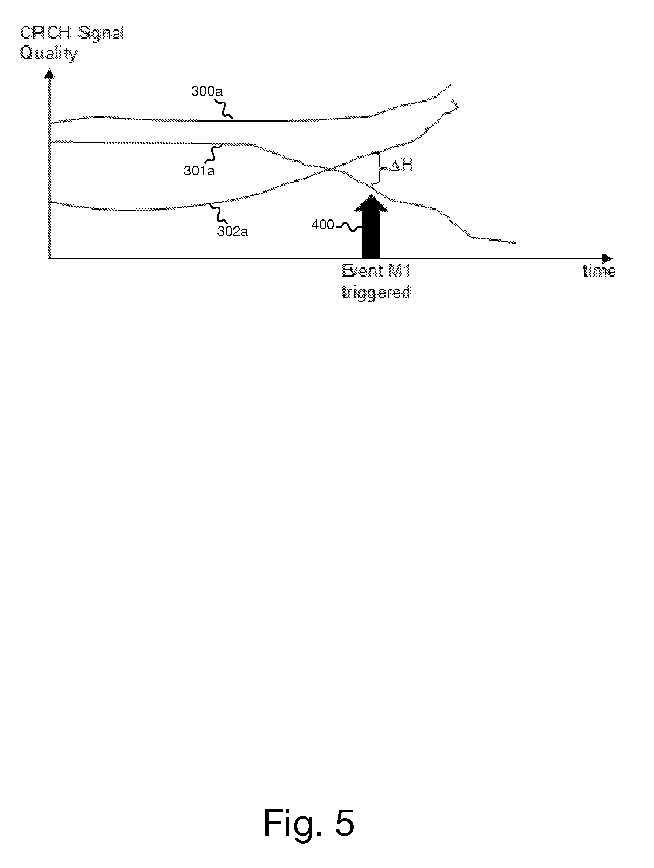

Figure 5 illustrates a viewgraph of reception qualities at the mobile transceiver 200 in Figure 4. The reception qualities are evaluated by the receive signal strength of the Common Pilot CHannels (CPICH) of the three cells 300a, 301a and 302a. The viewgraph in Figure 5 shows the three receive signal qualities over time, where in the beginning the receive signal quality of the first cell 300a is the best, followed by that of the second cell 301a and that of the third cell 302a. After some time the signal quality of the third cell 302a becomes better than that of the second cell 301a, as the UE 200 move farther away from base station transceiver 301 towards base station transceiver 302.

As the signals in Figure 5 indicate, the UE 200 in Figure 4 has an active set (DCH and/or E-DCH) containing the first cell 300a, the second cell 301a and the third cell 302a. The UE 200 uses Event 1a-m to initially select the second cell 301a as the SS cell. The set of cells for packet switched transmission then comprises the first cell 300a as PS cell and the second cell 301a as SS cell. The UE 200 then performs MP-HSDPA, where the first cell 301a is the PS cell and the second cell 301a is the SS cell. The UE 200 then moves towards the coverage between the first cell 300a and the third cell 302a as shown in Figure 4 by the arrow 202.

The network configured Event M1 at the UE 200, where this event is triggered if any signal quality measured is greater than that of the SS cell by ΔH as a hysteresis value, which is shown in Figure 5 together with the measured signal qualities of all 3 cells. As the UE 200 moves away from the second cell 301a and closer to the third cell 302a, the signal quality measured for the third cell 302a becomes higher than that of the second cell 301a up to a point where it is ΔH and the UE 200 performs the trigger. This is indicated by the arrow 400 in Figure 5.

The RNC receiving the Event M1 then signals to the third cell 302 to configure a radio link between the third cell 302a and the UE 200. It is assumed that the third cell 302a is currently not overloaded and hence agrees to include this UE 200. The UE 200 therefore handovers its SS cell from the second cell 301a to the third cell 302a.

Since the SS cell 301a needs to communicate with the MP-HSDPA UE 200, naturally the SS cell 301a can be a member of the UE's 200 active sets. Due to the introduction of SS cell(s) in MP-HSDPA, there can be more than one serving cell change (i.e. handover) at the UE 200. The possible changes to PS and SS cells are shown in matrix in Table 1. In embodiments there may be more than one SS cell and the following Table 1 reflects a change in any of the SS cells.

**Table 1: Events to support possible changes to PS and SS cells**

| | Secondary Serving Cell | | |
|---|---|---|---|
| Primary | | Change | No Change |
| Serving | Change | Event M1, 1d | Event 1d |
| Cell | No Change | Event M1 | No Event |

For a system with more than one SS cell, this matrix applies to changes to any of the SS cells. In other words, embodiments may introduce additional trigger events at the UE 200 to manage the changes described in the above table. The right hand side of the table may describe changes in the active set using conventional events and reporting since there is no change of the SS Cell and hence existing events are used.

In line with the above, the means for establishing 14 the set of cells is adapted to select two or more cells 301a, 302a as a set of secondary serving cells. The set of secondary serving cells being determined based on the information on the reception quality of radio signals from the two or more cells 301a, 302a at the mobile transceiver 200 indicating that the reception qualities of the signals from the two or more cells 301a, 302a allow for packet switched data transmission from the two or more cells 301a, 302a to the mobile transceiver 200, and indicating that the reception qualities of the signals from the two or more cells 301a, 302a relative to the signal of the primary serving cell have been better than the relative cell-addition-threshold for a given cell-addition-time or indicating that the reception qualities of the signals from the two or more cells 301a, 302a have been above the absolute cell-addition-threshold for the given cell-addition-time. Correspondingly, at the mobile transceiver apparatus 20, the means for reporting 26 is adapted to report measurements on two or more cells 300a, 301a based on measurement configurations. The two or more cells may transmit on one or more frequencies.

Event M1 is triggered by the UE 200 if any of the non-serving cells (in Active Set) has a signal quality higher than that of any of the SS cells by a threshold for a predetermined period of time (cell-replacement-time). The candidate cells for comparison against SS cell(s) exclude the PS cell. This event would trigger for a SS cell change by the network in line with what was described with respect to Figure 4.

In the following it is assumed that the apparatus 10 is comprised in a RNC, which controls the base station transceivers 300, 301, and 302 in Figure 4. In addition to the Event-M1 trigger at the UE 200, the RNC, where the apparatus 10 is assumed to be located, verifies whether the NB identified by the UE has sufficient resource to support additional UE. This can be done by using the respective trigger events at the NB 300, 301, 302, where the NB 300, 301, 302 can perform a measurement report whenever its resource is above or below a threshold. It is to be noted that Event M1 is just a name used in this document. It can be renamed to any other names. Event M1 compares candidate SS to an existing SS cell, this event may not be used if there is no existing SS cell.

Figure 4 depicts another movement of the mobile transceiver 200 using the arrow 203. In this scenario the UE 200 moves out of the overlapping area between cells 300a and 301a towards the base station transceiver 300. In this scenario the radio signal of the second cell 301a becomes weaker and is thus removed from the set of cells for packet switched transmission. In the embodiment of the apparatus 10 the means for establishing 14 the set of cells is adapted to remove the second cell 301a from the set of cells for packet switched transmission, when the information on the reception quality of a radio signal from the second cell 301a at the mobile transceiver 200 indicates that the reception quality of the radio signal from the second cell 301a relative to the radio signal of the primary serving cell has been below a relative cell-removal-threshold for a cell-removal-time, or when the information on the reception quality of a radio signal from the second cell 301a at the mobile transceiver 200 indicates that the reception quality of the signal from the second cell 301a has been below an absolute cell-removal-threshold for a cell-removal-time.

On the side of the mobile transceiver apparatus 20 the means for reporting 26 is adapted to report information on the second cell 301a based on a respective measurement configuration, when the reception quality of a radio signal from the second cell 301a at the mobile transceiver 200 indicates that the reception quality of the signal from the second cell 301a relative to the signal of the primary serving cell has been below a relative cell-removal-threshold for a cell-removal-time or when the information on the reception quality of a radio signal from the second cell 301a at the mobile transceiver 200 indicates that the reception quality of the signal from the second cell 301a has been below an absolute cell-removal-threshold for a cell-removal-time.

In other words, for a cell-removal from the set of cells for packet switched transmission (sub-active set) an absolute and/or a relative threshold can be configured. Similar to the active set, the sub-active set may be managed using an event similar to Event 1b to remove cells from the sub-active set. This event is also referred to as Event 1b-m. Event 1b-m is similar to the Event 1b but unlike Event 1b, Event 1b-m compares cells in the sub-active set only. Event 1b-m triggers if the difference in signal quality of the primary serving cell and a cell in the sub-active set is larger than a threshold for a predetermined period of time, falls below an absolute threshold respectively. If the sub-active set contains only the SS cell, Event 1b-m can cause the UE 200 to remove the SS cell.

Furthermore, PS cell and SS cell may be exchanged, i.e. the first cell 300a may become SS and the second cell 301a may become PS cell, when the signal quality of the second cell 301a becomes better than the signal quality of the firs cell 300a. In Figure 4 this can be imagined when the UE 200 moves closer to base station transceiver 301 but is still in the overlapping region of cells 300a and 301a. On the network side, the means for establishing 14 the set of cells (sub-active set) is adapted to replace the primary serving cell with the second cell 301a and to replace the secondary serving cell with the first cell 300a, when the information on the reception quality of the radio signal from the second cell 301a at the mobile transceiver 200 indicates that the reception quality of the signal from the second cell 301a has been higher than the reception quality of the radio signal of the first cell 300a for a cell-exchange-time.

At the mobile transceiver apparatus 20 the means for reporting 26 is adapted to report information on the primary serving cell and the secondary serving cell based on a measurement configuration, when the reception quality of the radio signal from the second cell 301a at the mobile transceiver 200 indicates that the reception quality of the signal from the second cell 301a has been better than the reception quality of the radio signal of the first cell 300a for a cell-exchange-time.

The Event M1 can be used together with Event 1d as indicated in the above table. This allows simultaneous changes to PS and SS cells, e.g. Event 1d is triggered by the SS cell. This would cause a swap between PS and SS. Another example is, when a non-serving cell triggers Event 1d and another non-serving cell triggers Event M1. This would cause both the PS and SS to change to non-serving cells.

The parameters for these new events (M1, 1a-m and 1b-m) are configurable by the network. The parameters include (but may not be limited to) a respective threshold and hysteresis values, the respective time periods, respectively.

In an embodiment the Event M1 may consider only cells in the sub-active set formed by Event 1a-m and Event 1b-m. This reduces the number of comparisons at the UE 200, however, it also reduces the number of possible candidates.

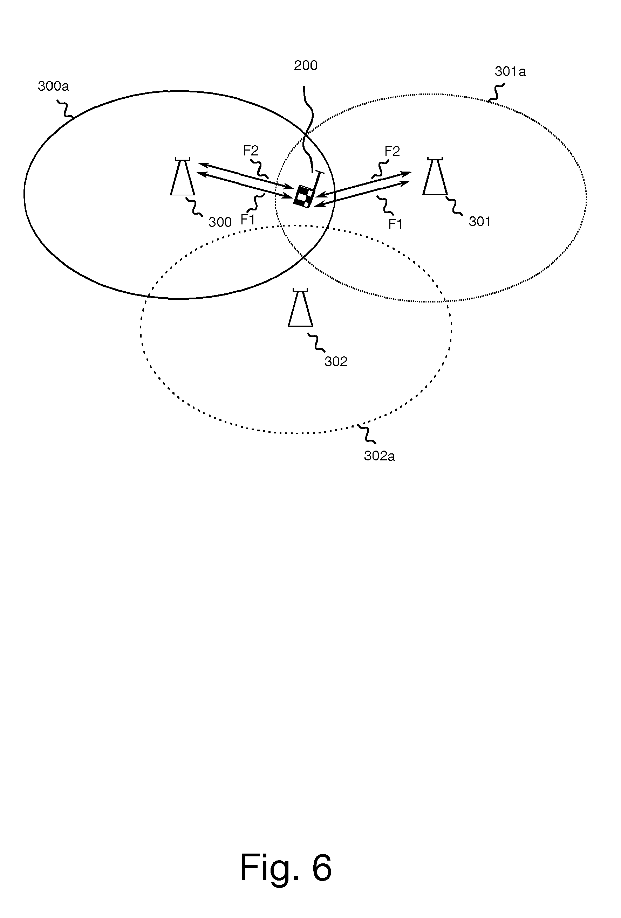

Figure 6 illustrates another network scenario with three base station transceivers 300, 301, 302 operating three cells 300a, 301a, 302a and transmitting on two frequency layers F1 and F2. Figure 6 also illustrates the mobile transceiver 200 in the overlapping region. It is again assumed that the selection apparatus 20 is implemented in an RNC controlling the base station transceivers 300, 301 and 302. The mobile transceiver apparatus 20 is implemented in the mobile transceiver 200.

In the embodiment illustrated by Figure 6 the means for controlling the one or more active sets controls two or more different or equal active sets of cells on the different frequency carriers F1 and F2. The active sets of cells comprise cells which communicate circuit switched data to the mobile transceiver 200 (DCH), which receive packet switched uplink data (E-DCH), respectively. The means for establishing 14 the set of cells for packet switched transmission is adapted establish on one or more equal or different sets of cells and to select only cells from the one or more active sets for the one or more sets of cells for packet switched transmission. In line, the means for maintaining the one or more active sets in the mobile transceiver apparatus 20 controls two or more different or equal active sets of cells on the different frequency carriers F1 and F2. The means for reporting 26 on the set of cells for packet switched transmission is adapted to report on one or more equal or different sets of cells and to select only cells from the one or more active sets for the one or more sets of cells for packet switched transmission.

In the embodiment depicted in Figure 6 more than one active set (and thus one or more sub-active sets) is operated, as e.g. also in combination with Dual Carrier-High-Speed Uplink Packet Access (DC-HSUPA). The Events M1, 1a-m and 1b-m can be configured for each of the one or more sub-active sets (sets of cells for packet switched transmission). This is to cover the case where DC and MP HSDPA (DC-MP-HSDPA) are active as shown in Figure 6 by the double sided arrows. It is to be noted that there may be different sets of cells for uplink and downlink transmission. Here, the first cell 300a and the second cell 301a operate in DC-HSDPA mode with frequencies F1 and F2, and the first cell 300a and the second cell 301a also performs MP-HSDPA with the UE 200. Thus the UE 200 receives 4 HSDPA streams from carriers F1 and F2 in cells 300a and 301a. Here, the UE 200 has the ability to add a radio link in F2 and it can reuse the above described events in multiple frequency layers. It is to be noted that in some embodiments the means for establishing 14 the set of cells for packet switched transmission is adapted to select the primary serving cell and the secondary serving cell of a sub-active set on the same frequency carrier.

In another embodiment for DC-MP-HSDPA operations as shown in Figure 6 only one active set (e.g. without DC-HSUPA) may be used. In other words, in this embodiment the transmission arrows of Figure 6 would be single sided and pointing towards the UE 200. A cell may then be selected as the SS cell on a secondary carrier only if this cell is also a SS cell on the primary carrier. For example in Figure 6, if F1 is the primary carrier then only the secondary carrier F2 of the second cell 301a can be considered as the secondary serving cell's secondary carrier. The secondary carrier F2 of the third cell 302a may not be considered as a candidate for the secondary serving cell's secondary carrier. This can avoid forming a virtual active set for F2, (although it can be done in other embodiments) and also reduces the complexity in splitting and scheduling packets to the UE 200.

In another embodiment for DC-MP-HSDPA operation only one active set can be used. In such an embodiment an additional Event M2 can be defined for the secondary carrier F2. Event M2 can be triggered if the difference in signal quality between the primary carrier F1 of the PS cell and a secondary carrier (i.e. in the PS and SS cells) falls below a threshold for a predetermined period of time. This may give the UE 200 a criterion to remove a secondary carrier, i.e. this event compares only secondary carriers F2. In other words, in some embodiments the primary and secondary serving cells may be considered on different frequency carriers. In other embodiments, for the secondary serving cell only cells may be considered, which operate on the same frequency carrier as the primary serving cell. In this embodiment a relative threshold is considered, in another embodiment for DC-MP-HSDPA operation with one active set an absolute threshold can be considered. An Event M3 can be defined for the secondary carrier F2. Event M3 is triggered if a secondary serving cell carrier (i.e. in the PS and SS cells) signal quality falls below a threshold for a predetermined period of time. This is to give the UE an absolute criterion to remove a secondary carrier. This event considers only secondary carriers.

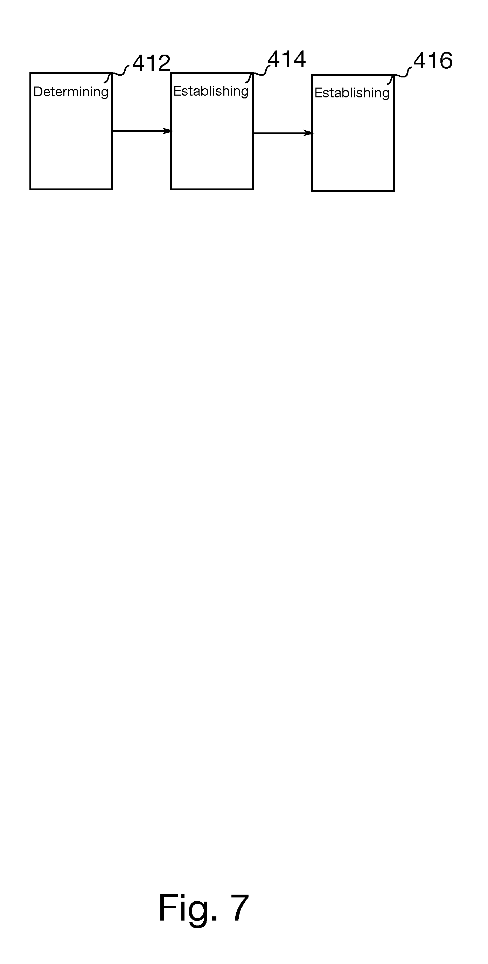

Figure 7 shows a block diagram of an embodiment of a method for selecting cells of a cellular mobile communication network to communicate with a mobile transceiver 200 using scheduled packet data. The mobile communication network comprising a plurality of base station transceivers 300, 301, 302, a base station transceiver 300, 301, 302 operating one or more cells 300a, 301a, 302a. The method comprises a step of determining 412 information on a reception quality of a radio signal of a cell at the mobile transceiver 200. The method comprises a further step of establishing 414 a set of cells for packet switched transmission to the mobile transceiver 200. The set of cells comprising a first cell 300a as a primary serving cell, the primary serving cell being determined based on the information on the reception quality of a radio signal from the first cell 300a at the mobile transceiver 200 indicating that the reception quality of the signal from the first cell 300a allows for packet switched data transmission from the first cell 300a to the mobile transceiver 200.

The method comprises a further step of adding 416 a second cell 301a as a secondary serving cell to the set of cells for communicating packet switched data from the second cell (301a) to the mobile transceiver (200). The secondary serving cell being determined based on information on a reception quality of a radio signal from the second cell 301a at the mobile transceiver 200 indicating that the reception quality of the signal from the second cell 301a allows for packet switched data transmission from the second cell 301a to the mobile transceiver 200, and indicating that the reception quality of the signal from the second cell 301a relative to the signal of the primary serving cell has been better than a relative cell-addition-threshold for a given cell-addition-time or indicating that the reception quality of the signal from the second cell 301a has been above an absolute cell-addition-threshold for the given cell-addition-time.

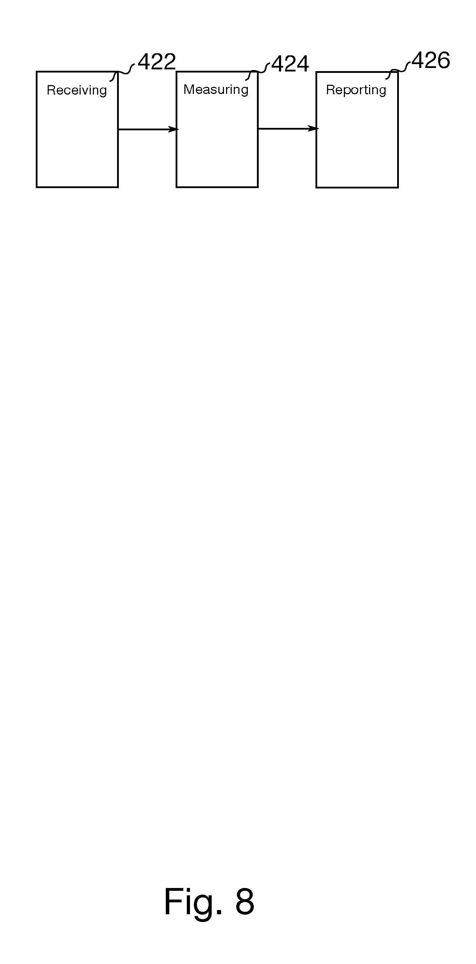

Figure 8 shows a block diagram of an embodiment of a method for a mobile transceiver 200 of a cellular mobile communication network. The mobile transceiver 200 communicates with the cellular mobile communication network using scheduled packet switched data transmission. The mobile communication network comprises a plurality of base station transceivers 300, 301, 302, a base station transceiver 300, 301, 302 operating one or more cells 300a, 301a, 302a. The method comprises a step of receiving 422 one or more measurement configurations, the measurement configurations comprise information on measurements on a reception quality of radio signals of a plurality of cells at the mobile transceiver 200. The method further comprises measuring 424 a reception quality of the radio signals of one or more cells of the plurality of cells at the mobile transceiver 200 based on the measurement configurations. The method comprises a further step of reporting 426 information on a measurement result on a first cell 300a to the mobile communication network to establish packet switched transmission from the first cell 300a as a primary serving cell to the mobile transceiver 200. The primary serving cell is determined based on the information on the reception quality of a radio signal from the first cell 300a at the mobile transceiver 200 indicating that the reception quality of the signal from the first cell 300a allows for packet switched data transmission from the first cell 300a to the mobile transceiver 200. The reporting 426 comprises reporting information on a measurement result on a second cell 301a to the mobile communication network to establish packet switched transmission from the second cell 301a as a secondary serving cell to the mobile transceiver 200. The secondary serving cell being determined based on the information on the reception quality of a radio signal from the second cell 301a at the mobile transceiver 200 indicating that the reception quality of the signal from the second cell 301a allows for packet switched data transmission from the second cell 301a to the mobile transceiver 200, and indicating that the reception quality of the signal from the second cell 301a relative to the signal of the primary serving cell has been better than a relative cell-addition-threshold for a given cell-addition-time or indicating that the reception quality of the signal from the second cell 301a has been above an absolute cell-addition-threshold for the given cell-addition-time.

Embodiments may further provide a computer program having a program code for performing one of the above methods, when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for determining", "means for establishing", "means for controlling", "means for receiving", "means for measuring", "means for reporting", "means for maintaining", etc., may be provided through the use of dedicated hardware, such as "a determiner", "an establisher" "a controller", "a receiver", "a measurer" "a reporter or transmitter", "a maintainer", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for selecting cells of a cellular mobile communication network to communicate with a mobile transceiver (200) using scheduled packet data, the mobile communication network comprising a plurality of base station transceivers (300; 301; 302), a base station transceiver (300; 301; 302) operating one or more cells (300a;301a;302a), the apparatus (10) comprising
means for determining (12) information on a reception quality of a radio signal of a cell (300a;301a;302a) at the mobile transceiver (200);
means for establishing (14) a set of cells for packet switched transmission to the mobile transceiver (200), the set of cells comprising a first cell (300a) as a primary serving cell, the primary serving cell being determined based on the information on the reception quality of a radio signal from the first cell (300a) at the mobile transceiver (200) indicating that the reception quality of the signal from the first cell (300a) allows for packet switched data transmission from the first cell (300a) to the mobile transceiver (200),
the means for establishing (14) the set of cells for packet switched transmission to the mobile transceiver (200) being further adapted to add a second cell (301a) as a secondary serving cell to the set of cells for communicating packet switched data from the second cell (301a) to the mobile transceiver (200), the secondary serving cell being determined based on information on a reception quality of a radio signal from the second cell (301a) at the mobile transceiver (200) indicating that the reception quality of the signal from the second cell (301a) allows for packet switched data transmission from the second cell (301a) to the mobile transceiver (200), and indicating that the reception quality of the signal from the second cell (301a) relative to the signal of the primary serving cell has been better than a relative cell-addition-threshold for a given cell-addition-time or indicating that the reception quality of the signal from the second cell (301a) has been above an absolute cell-addition-threshold for the given cell-addition-time.

2. The apparatus (10) of claim 1, wherein the means for establishing (14) the set of cells is adapted to replace the second cell (301a) with a third cell (302a) as secondary serving cell, when the information on the reception quality of a radio signal from the third cell (302a) at the mobile transceiver (200) indicates that the reception quality of the radio signal from the third cell (302a) has been higher than the reception quality of the radio signal from the second cell (301a) for a cell-replacement-time.

3. The apparatus (10) of claim 1, wherein the means for establishing (14) the set of cells is adapted to remove the second cell (301a) from the set of cells for packet switched transmission, when the information on the reception quality of a radio signal from the second cell (301a) at the mobile transceiver (200) indicates that the reception quality of the radio signal from the second cell (301a) relative to the radio signal of the primary serving cell has been below a relative cell-removal-threshold for a cell-removal-time or when the information on the reception quality of a radio signal from the second cell (301a) at the mobile transceiver (200) indicates that the reception quality of the signal from the second cell (301a) has been below an absolute cell-removal-threshold for a cell-removal-time.

4. The apparatus (10) of claim 1, wherein the means for establishing (14) the set of cells is adapted to replace the primary serving cell with the second cell (301a) and to replace the secondary serving cell with the first cell (300a), when the information on the reception quality of the radio signal from the second cell (301a) at the mobile transceiver (200) indicates that the reception quality of the signal from the second cell (301a) has been higher than the reception quality of the radio signal of the first cell (300a) for a cell-exchange-time.

5. The apparatus (10) of claim 1, wherein the means for determining (12) is further adapted to determine information on a capacity of the second cell (301a) from a base station transceiver (301) of the second cell (301a), the information on the capacity comprising an indication on whether the second cell (301a) has capacity for transmitting packet switched data to the mobile transceiver (200), and wherein the means for establishing (14) is further adapted to select the second cell (301a) for the set of cells when the indication indicates that the second cell (301a) has the capacity for transmitting packet switched data to the mobile transceiver (200).

6. The apparatus (10) of claim 1, further comprising means for controlling one or more active sets of cells, the one or more active sets of cells comprising cells which communicate circuit switched data to the mobile transceiver (200) or cells which receive uplink packet switched data from the mobile transceiver (200), wherein the means for establishing (14) the set of cells for packet switched transmission is adapted to select only cells from the one or more active sets for the set of cells for packet switched transmission, and/or wherein the means for controlling controls two or more different or equal active sets of cells on different frequency carriers (F1;F2), the active sets of cells comprising cells which communicate circuit switched data to the mobile transceiver (200) or cells which receive uplink packet switched data from the mobile transceiver (200), wherein the means for establishing (14) the set of cells for packet switched transmission is adapted to establish one or more equal or different sets of cells and to select only cells from the active sets for the one or more sets of cells for packet switched transmission, and/or wherein the means for establishing (14) the set of cells for packet switched transmission is adapted to select the primary serving cell and the secondary serving cell on the same frequency carrier.

7. An apparatus (20) for a mobile transceiver (200) of a cellular mobile communication network, the mobile transceiver (200) communicating with the cellular mobile communication network using scheduled packet switched data transmission, the mobile communication network comprising a plurality of base station transceivers (300;301;302), a base station transceiver (300;301;302) operating one or more cells (300a;301a;302a), the apparatus (20) comprising means for receiving (22) one or more measurement configurations, the measurement configurations comprising information on measurements on a reception quality of radio signals of a plurality of cells (300a;301a;302a) at the mobile transceiver (200);
means for measuring (24) a reception quality of the radio signals of one or more cells (300a;301a;302a) of the plurality of cells at the mobile transceiver (200) based on the measurement configurations;
means for reporting (26) information on a measurement result on a first cell (300a) to the mobile communication network to establish packet switched transmission from the first cell (300a) as a primary serving cell to the mobile transceiver (200), the primary serving cell being determined based on the information on the reception quality of a radio signal from the first cell (300a) at the mobile transceiver (200) indicating that the reception quality of the signal from the first cell (300a) allows for packet switched data transmission from the first cell (300a) to the mobile transceiver (200),
the means for reporting (26) being further adapted to report information on a measurement result on a second cell (301a) to the mobile communication network to establish packet switched transmission from the second cell (301a) as a secondary serving cell to the mobile transceiver (200), the secondary serving cell being determined based on the information on the reception quality of a radio signal from the second cell (301a) at the mobile transceiver (200) indicating that the reception quality of the signal from the second cell (301a) allows for packet switched data transmission from the second cell (301a) to the mobile transceiver (200), and indicating that the reception quality of the signal from the second cell (301a) relative to the signal of the primary serving cell has been better than a relative cell-addition-threshold for a given cell-addition-time or indicating that the reception quality of the signal from the second cell (301a) has been above an absolute cell-addition-threshold for the given cell-addition-time.

8. The apparatus (20) of claim 11, wherein the means for reporting (26) is adapted to report information on a third cell (302a) as secondary serving cell based on a measurement configuration, when the information on the reception quality of a radio signal from the third cell (302a) at the mobile transceiver (200) indicates that the reception quality of the radio signal from the third cell (302a) has been higher than the reception quality of the radio signal from the second cell (301a) for a cell-replacement-time.

9. The apparatus (20) of claim 11, wherein the means for reporting (26) is adapted to report information on the second cell (301a) based on a measurement configuration, when the reception quality of a radio signal from the second cell (301a) at the mobile transceiver (200) indicates that the reception quality of the signal from the second cell (301a) relative to the signal of the primary serving cell has been below a relative cell-removal-threshold for a cell-removal-time or when the information on the reception quality of a radio signal from the second cell (301a) at the mobile transceiver (200) indicates that the reception quality of the signal from the second cell (301a) has been below an absolute cell-removal-threshold for a cell-removal-time.

10. The apparatus (20) of claim 11, wherein the means for reporting (26) is adapted to report information on the primary serving cell and the secondary serving cell based on a measurement configuration, when the reception quality of the radio signal from the second cell (301a) at the mobile transceiver (200) indicates that the reception quality of the signal from the second cell (301a) has been better than the reception quality of the radio signal of the first cell (300a) for a cell-exchange-time.

11. The apparatus (20) of claim 11, further comprising means for maintaining one or more active sets of cells, the one or more active sets of cells comprising cells (300a;301a) which communicate circuit switched data to the mobile transceiver (200) or cells which receive uplink packet switched data from the mobile transceiver (200), wherein the means for reporting (26) information on the cells for packet switched transmission is adapted to report only on cells 300a, 301a from the one or more active sets for the set of cells for packet switched transmission and/or wherein the means for maintaining controls two or more different or equal active sets of cells on different frequency carriers (F1;F2), the active sets of cells comprising cells which communicate circuit switched data to the mobile transceiver (200) or cells which receive uplink packet switched data from the mobile transceiver (200), wherein the means for reporting (26) on the set of cells for packet switched transmission is adapted to report on one or more equal or different sets of cells and to select only cells from the one or more active sets for the one or more sets of cells for packet switched transmission.

12. A radio network controller or a base station transceiver comprising the apparatus of claim 1 and/or a mobile transceiver (200) comprising the apparatus (20) of claim 11 and/or a system comprising the radio network controller or base station transceiver and the mobile transceiver (200).

13. A method for selecting cells of a cellular mobile communication network to communicate with a mobile transceiver (200) using scheduled packet data, the mobile communication network comprising a plurality of base station transceivers (300;301;302), a base station transceiver (300;301;302) operating one or more cells (300a;301a;302a), the method comprising
determining (412) information on a reception quality of a radio signal of a cell at the mobile transceiver (200);
establishing (414) a set of cells for packet switched transmission to the mobile transceiver (200), the set of cells comprising a first cell (300a) as a primary serving cell, the primary serving cell being determined based on the information on the reception quality of a radio signal from the first cell (300a) at the mobile transceiver (200) indicating that the reception quality of the signal from the first cell (300a) allows for packet switched data transmission from the first cell (300a) to the mobile transceiver (200),
adding (416) a second cell (301a) as a secondary serving cell to the set of cells for communicating packet switched data from the second cell (301a) to the mobile transceiver (200), the secondary serving cell being determined based on information on a reception quality of a radio signal from the second cell (301a) at the mobile transceiver (200) indicating that the reception quality of the signal from the second cell (301a) allows for packet switched data transmission from the second cell (301a) to the mobile transceiver (200), and indicating that the reception quality of the signal from the second cell (301a) relative to the signal of the primary serving cell has been better than a relative cell-addition-threshold for a given cell-addition-time or indicating that the reception quality of the signal from the second cell (301a) has been above an absolute cell-addition-threshold for the given cell-addition-time.

14. A method for a mobile transceiver (200) of a cellular mobile communication network, the mobile transceiver (200) communicating with the cellular mobile communication network using scheduled packet switched data transmission, the mobile communication network comprising a plurality of base station transceivers (300;301;302), a base station transceiver (300;301;302) operating one or more cells (300a;301a;302a), the method comprising
receiving (422) one or more measurement configurations, the measurement configurations comprising information on measurements on a reception quality of radio signals of a plurality of cells at the mobile transceiver (200);
measuring (424) a reception quality of the radio signals of one or more cells of the plurality of cells at the mobile transceiver (200) based on the measurement configurations;
reporting (426) information on a measurement result on a first cell (300a) to the mobile communication network to establish packet switched transmission from the first cell (300a) as a primary serving cell to the mobile transceiver (200), the primary serving cell being determined based on the information on the reception quality of a radio signal from the first cell (300a) at the mobile transceiver (200) indicating that the reception quality of the signal from the first cell (300a) allows for packet switched data transmission from the first cell (300a) to the mobile transceiver (200),
reporting (426) information on a measurement result on a second cell (301a) to the mobile communication network to establish packet switched transmission from the second cell (301a) as a secondary serving cell to the mobile transceiver (200), the secondary serving cell being determined based on the information on the reception quality of a radio signal from the second cell (301a) at the mobile transceiver (200) indicating that the reception quality of the signal from the second cell (301a) allows for packet switched data transmission from the second cell (301a) to the mobile transceiver (200), and indicating that the reception quality of the signal from the second cell (301a) relative to the signal of the primary serving cell has been better than a relative cell-addition-threshold for a given cell-addition-time or indicating that the reception quality of the signal from the second cell (301a) has been above an absolute cell-addition-threshold for the given cell-addition-time.

15. A computer program having a program code for performing one of the methods of claims 13 or 14, when the computer program is executed on a computer or processor.

## Amended claims

### Amended claims in accordance with Rule 137(2) EPC.

**1.** An apparatus (10) for a radio network controller or a base station transceiver and for selecting cells of a cellular mobile communication network to communicate with a mobile transceiver (200) using scheduled packet data, the mobile communication network comprising a plurality of base station transceivers (300; 301; 302), a base station transceiver (300; 301; 302) operating one or more cells (300a;301a;302a), the apparatus (10) comprising means for determining (12) information on a reception quality of a radio signal of a cell (300a;301a;302a) at the mobile transceiver (200);
means for establishing (14) a set of cells for packet switched transmission to the mobile transceiver (200), the set of cells comprising a first cell (300a) as a primary serving cell, the primary serving cell being determined based on the information on the reception quality of a radio signal from the first cell (300a) at the mobile transceiver (200) indicating that the reception quality of the signal from the first cell (300a) allows for packet switched data transmission from the first cell (300a) to the mobile transceiver (200),
the means for establishing (14) the set of cells for packet switched transmission to the mobile transceiver (200) being further adapted to add a second cell (301a) as a secondary serving cell to the set of cells for communicating packet switched data from the second cell (301a) to the mobile transceiver (200), the secondary serving cell being determined based on information on a reception quality of a radio signal from the second cell (301a) at the mobile transceiver (200) indicating that the reception quality of the signal from the second cell (301a) allows for packet switched data transmission from the second cell (301a) to the mobile transceiver (200), and indicating that the reception quality of the signal from the second cell (301a) relative to the signal of the primary serving cell has been better than a relative cell-addition-threshold for a given cell-addition-time or indicating that the reception quality of the signal from the second cell (301a) has been above an absolute cell-addition-threshold for the given cell-addition-time.

**2.** The apparatus (10) of claim 1, wherein the means for establishing (14) the set of cells is adapted to replace the second cell (301a) with a third cell (302a) as secondary serving cell, when the information on the reception quality of a radio signal from the third cell (302a) at the mobile transceiver (200) indicates that the reception quality of the radio signal from the third cell (302a) has been higher than the reception quality of the radio signal from the second cell (301a) for a cell-replacement-time.

**3.** The apparatus (10) of claim 1, wherein the means for establishing (14) the set of cells is adapted to remove the second cell (301a) from the set of cells for packet switched transmission, when the information on the reception quality of a radio signal from the second cell (301a) at the mobile transceiver (200) indicates that the reception quality of the radio signal from the second cell (301a) relative to the radio signal of the primary serving cell has been below a relative cell-removal-threshold for a cell-removal-time or when the information on the reception quality of a radio signal from the second cell (301a) at the mobile transceiver (200) indicates that the reception quality of the signal from the second cell (301a) has been below an absolute cell-removal-threshold for a cell-removal-time.

**4.** The apparatus (10) of claim 1, wherein the means for establishing (14) the set of cells is adapted to replace the primary serving cell with the second cell (301a) and to replace the secondary serving cell with the first cell (300a), when the information on the reception quality of the radio signal from the second cell (301a) at the mobile transceiver (200) indicates that the reception quality of the signal from the second cell (301a) has been higher than the reception quality of the radio signal of the first cell (300a) for a cell-exchange-time.

**5.** The apparatus (10) of claim 1, wherein the means for determining (12) is further adapted to determine information on a capacity of the second cell (301a) from a base station transceiver (301) of the second cell (301a), the information on the capacity comprising an indication on whether the second cell (301a) has capacity for transmitting packet switched data to the mobile transceiver (200), and wherein the means for establishing (14) is further adapted to select the second cell (301a) for the set of cells when the indication indicates that the second cell (301a) has the capacity for transmitting packet switched data to the mobile transceiver (200).

**6.** The apparatus (10) of claim 1, further comprising means for controlling one or more active sets of cells, the one or more active sets of cells comprising cells which communicate circuit switched data to the mobile transceiver (200) or cells which receive uplink packet switched data from the mobile transceiver (200), wherein the means for establishing (14) the set of cells for packet switched transmission is adapted to select only cells from the one or more active sets for the set of cells for packet switched transmission, and/or wherein the means for controlling controls two or more different or equal active sets of cells on different frequency carriers (F1;F2), the active sets of cells comprising cells which communicate circuit switched data to the mobile transceiver (200) or cells which receive uplink packet switched data from the mobile transceiver (200), wherein the means for establishing (14) the set of cells for packet switched transmission is adapted to establish one or more equal or different sets of cells and to select only cells from the active sets for the one or more sets of cells for packet switched transmission, and/or wherein the means for establishing (14) the set of cells for packet switched transmission is adapted to select the primary serving cell and the secondary serving cell on the same frequency carrier.

**7.** An apparatus (20) for a mobile transceiver (200) of a cellular mobile communication network, the mobile transceiver (200) communicating with the cellular mobile communication network using scheduled packet switched data transmission, the mobile communication network comprising a plurality of base station transceivers (300;301;302), a base station transceiver (300;301;302) operating one or more cells (300a;301a;302a), the apparatus (20) comprising means for receiving (22) one or more measurement configurations, the measurement configurations comprising information on measurements on a reception quality of radio signals of a plurality of cells (300a;301a;302a) at the mobile transceiver (200);
means for measuring (24) a reception quality of the radio signals of one or more cells (300a;301a;302a) of the plurality of cells at the mobile transceiver (200) based on the measurement configurations;
means for reporting (26) information on a measurement result on a first cell (300a) to the mobile communication network to establish packet switched transmission from the first cell (300a) as a primary serving cell to the mobile transceiver (200), the primary serving cell being determined based on the information on the reception quality of a radio signal from the first cell (300a) at the mobile transceiver (200) indicating that the reception quality of the signal from the first cell (300a) allows for packet switched data transmission from the first cell (300a) to the mobile transceiver (200),
the means for reporting (26) being further adapted to report information on a measurement result on a second cell (301a) to the mobile communication network to establish packet switched transmission from the second cell (301a) as a secondary serving cell to the mobile transceiver (200), the secondary serving cell being determined based on the information on the reception quality of a radio signal from the second cell (301a) at the mobile transceiver (200) indicating that the reception quality of the signal from the second cell (301a) allows for packet switched data transmission from the second cell (301a) to the mobile transceiver (200), and indicating that the reception quality of the signal from the second cell (301a) relative to the signal of the primary serving cell has been better than a relative cell-addition-threshold for a given cell-addition-time or indicating that the reception quality of the signal from the second cell (301a) has been above an absolute cell-addition-threshold for the given cell-addition-time.

**8.** The apparatus (20) of claim 7, wherein the means for reporting (26) is adapted to report information on a third cell (302a) as secondary serving cell based on a measurement configuration, when the information on the reception quality of a radio signal from the third cell (302a) at the mobile transceiver (200) indicates that the reception quality of the radio signal from the third cell (302a) has been higher than the reception quality of the radio signal from the second cell (301a) for a cell-replacement-time.

**9.** The apparatus (20) of claim 7, wherein the means for reporting (26) is adapted to report information on the second cell (301a) based on a measurement configuration, when the reception quality of a radio signal from the second cell (301a) at the mobile transceiver (200) indicates that the reception quality of the signal from the second cell (301a) relative to the signal of the primary serving cell has been below a relative cell-removal-threshold for a cell-removal-time or when the information on the reception quality of a radio signal from the second cell (301a) at the mobile transceiver (200) indicates that the reception quality of the signal from the second cell (301a) has been below an absolute cell-removal-threshold for a cell-removal-time.

**10.** The apparatus (20) of claim 7, wherein the means for reporting (26) is adapted to report information on the primary serving cell and the secondary serving cell based on a measurement configuration, when the reception quality of the radio signal from the second cell (301a) at the mobile transceiver (200) indicates that the reception quality of the signal from the second cell (301a) has been better than the reception quality of the radio signal of the first cell (300a) for a cell-exchange-time.

**11.** The apparatus (20) of claim 7, further comprising means for maintaining one or more active sets of cells, the one or more active sets of cells comprising cells (300a;301a) which communicate circuit switched data to the mobile transceiver (200) or cells which receive uplink packet switched data from the mobile transceiver (200), wherein the means for reporting (26) information on the cells for packet switched transmission is adapted to report only on cells 300a, 301a a from the one or more active sets for the set of cells for packet switched transmission and/or wherein the means for maintaining controls two or more different or equal active sets of cells on different frequency carriers (F1;F2), the active sets of cells comprising cells which communicate circuit switched data to the mobile transceiver (200) or cells which receive uplink packet switched data from the mobile transceiver (200), wherein the means for reporting (26) on the set of cells for packet switched transmission is adapted to report on one or more equal or different sets of cells and to select only cells from the one or more active sets for the one or more sets of cells for packet switched transmission.

**12.** A system comprising a radio network controller or base station transceiver comprising an apparatus (10) of claim 1 and a mobile transceiver (200) comprising the apparatus (20) of claim 7.

**13.** A method for a radio network controller or a base station transceiver and for selecting cells of a cellular mobile communication network to communicate with a mobile transceiver (200) using scheduled packet data, the mobile communication network comprising a plurality of base station transceivers (300;301;302), a base station transceiver (300;301;302) operating one or more cells (300a;301a;302a), the method comprising
determining (412) information on a reception quality of a radio signal of a cell at the mobile transceiver (200);
establishing (414) a set of cells for packet switched transmission to the mobile transceiver (200), the set of cells comprising a first cell (300a) as a primary serving cell, the primary serving cell being determined based on the information on the reception quality of a radio signal from the first cell (300a) at the mobile transceiver (200) indicating that the reception quality of the signal from the first cell (300a) allows for packet switched data transmission from the first cell (300a) to the mobile transceiver (200),
adding (416) a second cell (301a) as a secondary serving cell to the set of cells for communicating packet switched data from the second cell (301a) to the mobile transceiver (200), the secondary serving cell being determined based on information on a reception quality of a radio signal from the second cell (301a) at the mobile transceiver (200) indicating that the reception quality of the signal from the second cell (301a) allows for packet switched data transmission from the second cell (301a) to the mobile transceiver (200), and indicating that the reception quality of the signal from the second cell (301a) relative to the signal of the primary serving cell has been better than a relative cell-addition-threshold for a given cell-addition-time or indicating that the reception quality of the signal from the second cell (301a) has been above an absolute cell-addition-threshold for the given cell-addition-time.

**14.** A method for a mobile transceiver (200) of a cellular mobile communication network, the mobile transceiver (200) communicating with the cellular mobile communication network using scheduled packet switched data transmission, the mobile communication network comprising a plurality of base station transceivers (300;301;302), a base station transceiver (300;301;302) operating one or more cells (300a;301a;302a), the method comprising
receiving (422) one or more measurement configurations, the measurement configurations comprising information on measurements on a reception quality of radio signals of a plurality of cells at the mobile transceiver (200);
measuring (424) a reception quality of the radio signals of one or more cells of the plurality of cells at the mobile transceiver (200) based on the measurement configurations;
reporting (426) information on a measurement result on a first cell (300a) to the mobile communication network to establish packet switched transmission from the first cell (300a) as a primary serving cell to the mobile transceiver (200), the primary serving cell being determined based on the information on the reception quality of a radio signal from the first cell (300a) at the mobile transceiver (200) indicating that the reception quality of the signal from the first cell (300a) allows for packet switched data transmission from the first cell (300a) to the mobile transceiver (200),
reporting (426) information on a measurement result on a second cell (301a) to the mobile communication network to establish packet switched transmission from the second cell (301a) as a secondary serving cell to the mobile transceiver (200), the secondary serving cell being determined based on the information on the reception quality of a radio signal from the second cell (301a) at the mobile transceiver (200) indicating that the reception quality of the signal from the second cell (301a) allows for packet switched data transmission from the second cell (301a) to the mobile transceiver (200), and indicating that the reception quality of the signal from the second cell (301a) relative to the signal of the primary serving cell has been better than a relative cell-addition-threshold for a given cell-addition-time or indicating that the reception quality of the signal from the second cell (301a) has been above an absolute cell-addition-threshold for the given cell-addition-time.

**15.** A computer program having a program code for performing one of the methods of claims 13 or 14, when the computer program is executed on a computer or processor.
